# EUROPEAN PATENT SPECIFICATION

(11) **EP 3 890 298 B1**
(45) Date of publication and mention of the grant of the patent: **03.06.2026**
(21) Application number: 19891063.0
(22) Date of filing: 25.11.2019
(51) Int. Cl.: G06F 1/16, C03C 15/00, H04M 1/02

(54) **CAMERA HOLE COVER PLATE, CAMERA HOLE COVER PLATE PROCESSING METHOD AND MOBILE TERMINAL**
KAMERALOCHABDECKPLATTE, KAMERALOCHABDECKPLATTENVERARBEITUNGSVERFAHREN UND MOBILES ENDGERÄT
PLAQUE DE RECOUVREMENT DE TROU DE CAMÉRA, PROCÉDÉ DE TRAITEMENT DE PLAQUE DE RECOUVREMENT DE TROU DE CAMÉRA ET TERMINAL MOBILE

(30) Priority: 27.11.2018 CN 201811427132
(43) Date of publication of application: 06.10.2021
(73) Proprietor: VIVO MOBILE COMMUNICATION CO., LTD., Dongguan, Guangdong 523860 (CN)
(72) Inventor: LIAO, Liangfei, Dongguan, Guangdong 523860 (CN)
(74) Representative: Conti, Marco
(86) International application number: PCT/CN2019/120557
(87) International publication number: WO 2020/108425

(56) References cited:
- WO-A2-2013/184623
- CN-A- 104 445 975
- CN-A- 106 094 394
- CN-A- 107 291 160
- CN-A- 107 984 302
- CN-A- 107 995 329
- CN-A- 108 002 710
- CN-A- 108 040 143
- CN-A- 108 650 341
- CN-A- 109 547 676
- KR-A- 20180 055 734
- US-A1- 2013 236 645

## Description

### TECHNICAL FIELD

This disclosure relates to the technical field of camera hole cover plate design, and in particular, to a camera hole cover plate, a treatment method of a camera hole cover plate, and a mobile terminal.

### BACKGROUND

Large-screen mobile terminals are increasingly favored by users. As a result, increasing the screen-to-body ratio of mobile terminals has become a focus of research and development by major manufacturers. However, with increasingly fierce competition and investment in research and development, it has become increasingly difficult to increase the screen-to-body ratio of mobile terminals. Without affecting overall size of the mobile terminal, double-sided screen mobile terminals are a development direction for future mobile terminals.

A double-sided screen mobile terminal includes a primary display screen and a secondary display screen located on two sides of the mobile terminal respectively. A camera hole corresponding to a rear-facing camera of the double-sided screen mobile terminal is provided in a panel at which the secondary display screen is located, and the camera hole corresponding to the rear-facing camera is located on one side of the secondary display screen. Considering that there are display screens on two sides of the double-sided screen mobile terminal, and considering structural requirements and the protection of the camera, the double-sided screen mobile terminal includes a camera cover plate. The camera cover plate covers the camera hole, and part of the camera cover plate covers the secondary display screen. This part is a transparent area and is attached onto the secondary display screen.

Due to optical refraction, an edge of the camera hole cover plate refracts light which forms a rainbow pattern on the secondary display screen. When a user lights up the secondary display screen during use, an area, on the secondary display screen, close to the edge of the camera hole cover plate will exhibit an obvious rainbow pattern, which seriously affects use by the user.

Certainly, the camera hole cover may also be applied to the primary display screen. When the camera hole cover plate is installed at the primary display screen to protect a front-facing camera, a rainbow pattern may be produced on the primary display screen. However, this problem is not limited to double-side screen mobile terminals. As long as part of a camera hole cover plate is provided at a display screen of a mobile terminal, a rainbow pattern will occur on the display screen of the mobile terminal, which affects use by the user.

KR20180055734A1 discloses a method for producing side-reinforced window glass using sheet cutting.

CN108002710A1 discloses a cover plate glass lamination structure and a processing method.

WO2013184623A2 discloses apparatus, systems and methods for windows integration with cover glass and for processing cover glass to provide windows for electronic devices.

US20130236645A1 discloses a method for locally forming a smooth surface on frosted glass includes steps of: a) preparing a piece of frosted glass; b) locally coating the frosted glass with a sealant; and c) such forming the sealant that has a smooth surface.

### SUMMARY

This disclosure discloses a camera hole cover plate, as defined in accompanying claims, to resolve the problem that the camera hole cover plate may produce a rainbow pattern on a display screen of a mobile terminal.

The scope of the present invention is determined only by the scope of the appended claims.

In a first aspect, the present invention provides a camera hole cover plate according to claim 1 and further detailed in the dependent claim referring back to this claim.

In a second aspect, the present invention provides a mobile terminal according to claim 3 and further detailed in the dependent claims referring back to this claim.

The technical solutions provided in this disclosure can achieve the following beneficial effects:
The camera hole cover plate disclosed in this disclosure improves conventional structures of a camera hole cover plate by frosting part of the camera hole cover plate, so that the area of the cover plate edge located on the outside of the transparent area includes the frosted area. The frosted area can diffusely scatter incident light, making the light more dispersed, so that the light will not produce a rainbow pattern on the display screen after passing through the frosted area, which in turn prevents the rainbow pattern from affecting use of the mobile terminal by a user.

### BRIEF DESCRIPTION OF DRAWINGS

The drawings described herein are intended for a further understanding of this disclosure and constitute a part of this disclosure. Example embodiments of this disclosure and descriptions thereof are intended to explain this disclosure, and do not constitute any inappropriate limitation on this disclosure. In the drawings:
FIG. 1 is a schematic structural diagram of a mobile terminal disclosed in some embodiments of this disclosure;
FIG. 2 is a schematic structural diagram of a camera hole cover plate disclosed in some embodiments of this disclosure;
FIG. 3 is a schematic flowchart of a treatment method of a camera hole cover plate disclosed in some embodiments of this disclosure; and
FIG. 4 is another schematic flowchart of a treatment method of a camera hole cover plate disclosed in some embodiments of this disclosure.

Reference signs are described as follows:
100-camera hole cover plate, 110-cover plate body, 111-transparent area, 120-cover plate edge, 121-frosted area, 130-color ink layer, 200-terminal body, and 210-display screen.

### DESCRIPTION OF EMBODIMENTS

To make the objectives, technical solutions, and advantages of this disclosure clearer, the following clearly and completely describes the technical solutions of this disclosure with reference to specific embodiments of this disclosure and corresponding drawings. Apparently, the described embodiments are merely some rather than all the embodiments of this disclosure. All other embodiments that a person of ordinary skill in the art obtains without creative efforts based on the embodiments of this disclosure shall fall within the protection scope of this disclosure.

The technical solutions disclosed in the embodiments of this disclosure are described in detail below with reference to the accompanying drawings.

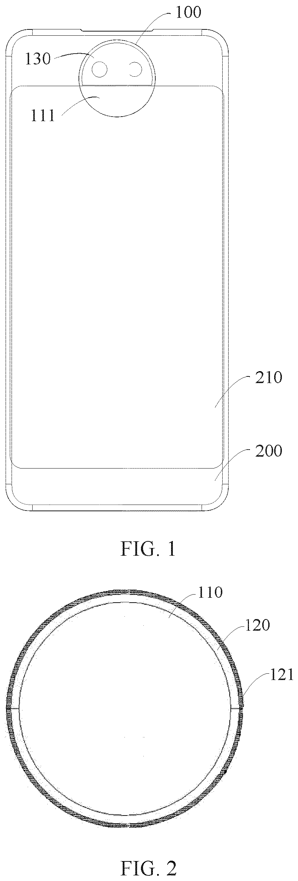

Referring to FIG. 1 and FIG. 2, some embodiments of this disclosure disclose a camera hole cover plate, which is typically a glass cover plate for protecting a camera hole of a mobile terminal.

Some embodiments of this disclosure disclose that the camera hole cover plate 100 includes a cover plate body 110 and a cover plate edge 120. The cover plate edge 120 and the cover plate body 110 are an integral structure, and the cover plate edge 120 is around the cover plate body 110. The cover plate edge 120 includes a transparent area 111 for covering a display screen, and the transparent area 111 does not affect the display of a corresponding area of the display screen covered by the transparent area 111. The area of the cover plate edge 120 located on the outside of the transparent area 111 comprises a frosted area 121.

The camera hole cover plate 100 disclosed in some embodiments of this disclosure improves conventional structures of a camera hole cover plate by frosting part of the camera hole cover plate, so that the area of the cover plate edge 120 located on the outside of the transparent area 111 includes the frosted area 121. The frosted area 121 can diffusely scatter incident light, making the light more dispersed, so that the light will not produce a rainbow pattern on the display screen after passing through the frosted area 121, which in turn prevents the rainbow pattern from affecting use of the mobile terminal by a user.

Generally, the camera hole cover plate 100 protrudes from the display screen 210 of the mobile terminal. In order to improve the hand feel of gripping the mobile terminal. The cover plate edge 120 is a rounded and chamfered edge with a smooth and rounded surface and no corners, preventing the user from having a bad touch when touching the camera hole cover plate 100.

As described above, the area of the cover plate edge 120 located on the outside of the transparent area 111 includes the frosted area 121. Specifically, the outer edge of the cover plate edge 120 back from the cover plate body 110 is full of the frosted area 121. In this case, the outer edge of the rounded and chamfered edge is the frosted area 121, and the inner edge of the rounded and chamfered edge is a smooth surface.

The cover plate edge 120 may include the frosted area 121 only in the area outside of the transparent area 111. Certainly, the cover plate edge 120 may include the frosted area 121 in all areas. In a specific embodiment, the cover plate edge 120 may be a circular edge, and the frosted area 121 is a circular area distributed around the cover plate body 110.

Generally, all the camera hole cover plate 100 except the transparent area 111 is located at a top frame of the mobile terminal. The cover plate body 110 is provided with a color ink layer 130, to better keep the color consistent with the top frame and further improve overall visual performance of the mobile terminal. Specifically, the color ink layer 130 may cover the area of the cover plate body 110 located at the frame of the mobile terminal. The color ink layer 130 may be a light-transmitting layer or a non-light-transmitting layer. The camera hole of the mobile terminal is typically located at the top frame of the mobile terminal, and the area of the cover plate body 110 opposite the camera hole is a transparent area, so as not to affect camera function of the mobile terminal.

Based on the foregoing camera hole cover plate, some embodiments of this disclosure disclose a mobile terminal. The disclosed mobile terminal includes a terminal body 200 and a camera hole cover plate 100, where the camera hole cover plate 100 is fixed to the terminal body 200 and covers a camera hole. The camera hole cover plate 100 is the camera hole cover plate described in the foregoing embodiment.

In this embodiment, the mobile terminal may be a single-sided screen mobile terminal or a double-sided screen mobile terminal. The mobile terminal disclosed in this embodiment may be a terminal device having a camera and a display screen, such as a smart phone, a tablet computer, a game console, and a wearable device. A specific type of the mobile terminal is not limited in some embodiments of this disclosure.

In a specific implementation, the mobile terminal may be a double-sided screen mobile terminal, where the double-sided screen mobile terminal includes a primary display screen and a secondary display screen located on two sides of the double-sided screen mobile terminal respectively, and the camera hole cover plate is fixed to a panel at which a secondary display screen is located.

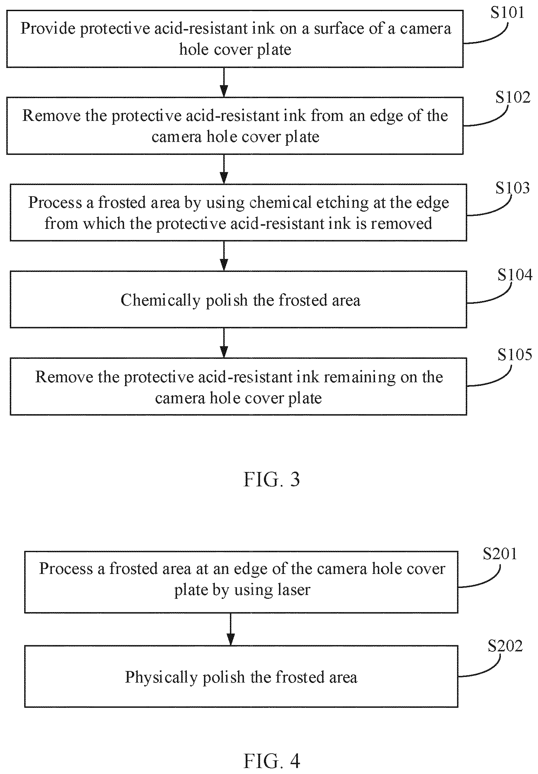

Based on the foregoing camera hole cover plate, some embodiments of this disclosure disclose a treatment method of a camera hole cover plate. Referring to FIG. 3, the disclosed treatment method includes:
S101. Provide protective acid-resistant ink on a surface of the camera hole cover plate.

In this step, a conventional camera hole cover plate is provided with protective acid-resistant ink on the surface, which protects the camera hole cover plate and prepares the camera hole cover plate for subsequent processes, preventing the subsequent processes from damaging the camera hole cover plate in areas not to be processed. Generally, in this step, a printer is used to print the protective acid-resistant ink on the camera hole cover plate. Specifically, thickness of the protective acid-resistant ink may be about 10 µm. Specifically, the printer may operate with a screen printing pressure of 6 par and a screen printing speed of 160 mm/s to 259 mm/s. After the screen printing operation is completed, the protective acid-resistant ink can be baked to implement curing. Specifically, the baking may be performed at a temperature of 160°C for 6 minutes.

S102. Remove the protective acid-resistant ink from an edge of the camera hole cover plate.

The protective acid-resistant ink provided in step S101 is partially removed, so as to allow the edge of the camera hole cover plate to be exposed, thereby providing processing conditions for the subsequent step S103.

S103. Process a frosted area by using chemical etching at the edge from which the protective acid-resistant ink is removed.

In this step, the chemical etching method is used to process the frosted area at the edge of the camera hole cover plate. Specifically, the chemical etching method is a commonly known technology and will not be described in detail herein. In a specific embodiment, HF (hydrofluoric acid) is used as an etching solution with a concentration of 4% to 9% and an etching time of 90 seconds.

S104. Chemically polish the frosted area.

In this step, the frosted area processed in step S103 is chemically polished. Specifically, the frosted area can be pickled for the purpose of chemical polishing.

S105. Remove the protective acid-resistant ink remaining on the camera hole cover plate.

In this step, the remaining protective acid-resistant ink on the camera hole cover plate is removed. There are many ways to remove the protective acid-resistant ink. In a specific implementation, this step may include: firstly, heating the protective acid-resistant ink remaining on the camera hole cover plate; and secondly, cleaning off the heated protective acid-resistant ink with clean water. Specifically, the protective acid-resistant ink remaining on the camera hole cover plate may be heated at a temperature of 65°C for 15 minutes. The cleaning with clean water may be performed at a temperature of 55°C for 2 minutes.

After the foregoing steps S101 to S105 are completed, a new camera hole cover plate can be obtained. Compared with conventional camera hole cover plates, the camera hole cover plate obtained by the treatment method disclosed in some embodiments of this disclosure has a frosted area at the edge.

Generally, the camera hole cover is a glass plate. Under this premise, after step S105, the treatment method may further include reinforcing the camera hole cover plate. For example, a toughening process is used to exchange sodium ions in the camera hole cover plate to reinforce overall strength of the entire camera hole cover plate.

As mentioned above, in order to make the area of the camera hole cover plate located at the top frame of the mobile terminal have a consistent color with the top frame, after reinforcing the camera hole cover plate, the treatment method may further include: covering the area of the camera hole cover plate located at the top frame of the mobile terminal with a color ink layer, where a portion of the color ink layer corresponding to the camera hole is an escape hole. The color ink layer has a consistent color with the top frame of the mobile terminal. Specifically, thickness of the color ink layer may be about 10 µm. Generally, this is performed by a screen printer with a 350 mesh screen plate under a screen printing pressure of 6 par and a screen printing speed of 160 mm/s to 259 mm/s, where the thickness of the color ink layer is less than 15 µm. Certainly, the escape hole left can prevent the color ink layer from blocking the camera hole.

Provided above is a chemical treatment method, and the camera hole cover plate disclosed in some embodiments of this disclosure may alternatively be treated by a physical method. Referring to FIG. 4, some embodiments of this disclosure disclose another treatment method of a camera hole cover plate. The method includes:
S201. Process a frosted area at an edge of the camera hole cover plate by using laser.

In this step, the laser is used to perform laser treatment at the edge of the camera hole cover plate. Specifically, this may be performed under a laser power of 10 w, a laser energy of 5% to 40%, and a laser accuracy within 0.1 mm.

S202. Physically polish the frosted area.

In this embodiment, various physical polishing methods may be used for the polishing, for example, manual polishing.

Similarly, after step S202, the treatment method shown in FIG. 4 may further include: reinforcing the camera hole cover plate. The specific reinforcing treatment is the same as the reinforcing treatment after step S105 described above.

Similarly, after reinforcing the camera hole cover plate, the treatment method shown in FIG. 4 may further include: covering the area of the camera hole cover plate located at the top frame of the mobile terminal with a color ink layer, where a portion of the color ink layer corresponding to the camera hole is an escape hole. Specifically, this step is consistent with the content of the counterpart of the treatment method shown in FIG. 3. For details, refer to the relevant description above.

The above embodiments of this disclosure focus on the differences between the various embodiments. As long as the different features of improvement in the various embodiments are not contradictory, they can be combined to form a more preferred embodiment. Details are not repeated herein for the purpose of concise description.

## Claims

1. A camera hole cover plate (100), comprising:
a cover plate body (110), wherein the cover plate body (110) comprises a transparent area (111) for covering a display screen (210); and
a cover plate edge (120), wherein the cover plate edge (120) and the cover plate body (110) are an integral structure, the cover plate edge (120) is around the cover plate body (110), and the area of the cover plate edge (120) located on the outside of the transparent area (111) comprises a frosted area (121);
wherein the cover plate edge (120) is rounded and chamfered, the outer edge of the cover plate edge (120) back from the cover plate body (110) comprises the frosted area (121) and the inner edge of the cover plate edge is a smooth surface; the cover plate edge (120) is a circular edge, and the frosted area (121) is a circular area distributed around the cover plate body (110).

2. The camera hole cover plate (100) according to claim 1, wherein the camera hole cover plate is provided with a color ink layer (130).

3. A mobile terminal, comprising a terminal body (200) and a camera hole cover plate (100), wherein the terminal body (200) has a camera hole, the camera hole cover plate (100) is fixed to the terminal body (200) and covers the camera hole, and the camera hole cover plate (100) is the camera hole cover plate (100) according to any one of claims 1 to 2.

4. The mobile terminal according to claim 3, wherein the mobile terminal is a double-sided screen mobile terminal, the mobile terminal comprises a primary display screen and a secondary display screen located on two sides of the double-sided screen mobile terminal respectively, and the camera hole cover plate (100) is fixed to a panel at which the secondary display screen is located.

## Patentansprüche

1. Kameralochabdeckplatte (100), umfassend:
einen Abdeckplattenkörper (110), wobei der Abdeckplattenkörper (110) einen transparenten Bereich (111) umfasst, um einen Anzeigebildschirm (210) abzudecken; und
einen Abdeckplattenrand (120), wobei der Abdeckplattenrand (120) und der Abdeckplattenkörper (110) eine einstückige Struktur sind, der Abdeckplattenrand (120) um den Abdeckplattenkörper (110) herum liegt und der Bereich des Abdeckplattenrands (120), der sich an der Außenseite des transparenten Bereichs (111) befindet, einen mattierten Bereich (121) umfasst;
wobei der Abdeckplattenrand (120) abgerundet und abgeschrägt ist, der Außenrand des Abdeckplattenrands (120) hinter dem Abdeckplattenkörper (110) den mattierten Bereich (121) umfasst und der Innenrand des Abdeckplattenrands eine glatte Oberfläche ist; der Abdeckplattenrand (120) ein kreisförmiger Rand ist und der mattierte Bereich (121) ein kreisförmiger Bereich ist, der um den Abdeckplattenkörper (110) verteilt ist.

2. Kameralochabdeckplatte (100) nach Anspruch 1, wobei die Kameralochabdeckplatte mit einer Farbtintenschicht (130) versehen ist.

3. Mobiles Endgerät, umfassend einen Endgerätkörper (200) und eine Kameralochabdeckplatte (100),
wobei der Endgerätkörper (200) ein Kameraloch aufweist, die Kameralochabdeckplatte (100) an dem Endgerätkörper (200) befestigt ist und das Kameraloch abdeckt, und die Kameralochabdeckplatte (100) die Kameralochabdeckplatte (100) nach einem der Ansprüche 1 bis 2 ist.

4. Mobiles Endgerät nach Anspruch 3, wobei das mobile Endgerät ein doppelseitiges mobiles Bildschirm-Endgeräts ist, das mobile Endgerät einen primären Anzeigebildschirm und einen sekundären Anzeigebildschirm umfasst, die sich jeweils auf zwei Seiten des doppelseitigen mobilen Endgeräts befinden, und die Kameralochabdeckplatte (100) ist an einer Platte befestigt, an der sich der sekundäre Anzeigebildschirm befindet.

## Revendications

1. Plaque de recouvrement de trou de caméra (100), comprenant :
un corps de plaque de recouvrement (110), dans lequel le corps de plaque de recouvrement (110) comprend une zone transparente (111) destinée à recouvrir un écran d'affichage (210) ; et
un bord de plaque de recouvrement (120), dans laquelle le bord de plaque de recouvrement (120) et le corps de plaque de recouvrement (110) forment une structure intégrale, le bord de plaque de recouvrement (120) entoure le corps de plaque de recouvrement (110), et la zone du bord de plaque de recouvrement (120) située à l'extérieur de la zone transparente (111) comprend une zone dépolie (121) ;
dans laquelle le bord de plaque de recouvrement (120) est arrondi et chanfreiné, le bord extérieur du bord de plaque de recouvrement (120) en retrait du corps de plaque de recouvrement (110) comprend la zone dépolie (121) et le bord intérieur du bord de plaque de recouvrement est une surface lisse ; le bord de plaque de recouvrement (120) est un bord circulaire, et la zone dépolie (121) est une zone circulaire répartie autour du corps de plaque de recouvrement (110).

2. Plaque de recouvrement de trou de caméra (100) selon la revendication 1, dans laquelle la plaque de recouvrement de trou de caméra est pourvue d'une couche d'encre couleur (130).

3. Terminal mobile, comprenant un corps de terminal (200) et une plaque de recouvrement de trou de caméra (100), dans lequel le corps de terminal (200) comporte un trou de caméra, la plaque de recouvrement de trou de caméra (100) est fixée au corps de terminal (200) et recouvre le trou de caméra, et la plaque de recouvrement de trou de caméra (100) est la plaque de recouvrement de trou de caméra (100) selon l'une quelconque des revendications 1 à 2.

4. Terminal mobile selon la revendication 3, dans lequel le terminal mobile est un terminal mobile à double écran, le terminal mobile comprend un écran d'affichage principal et un écran d'affichage secondaire situés, respectivement, sur les deux faces du terminal mobile à double écran, et la plaque de recouvrement de trou de caméra (100) est fixée à un panneau sur lequel se trouve l'écran d'affichage secondaire.
